# EUROPEAN PATENT APPLICATION

(11) **EP 4 006 722 A1**
(43) Date of publication of application: **01.06.2022**
(21) Application number: 20852559.2
(22) Date of filing: 10.08.2020
(51) Int. Cl.: G06F 9/448, H04M 1/725

(54) **DISPLAY DEVICE ALLOWING CHANGE OF INTEGRATED MODE**

(30) Priority: 14.08.2019 KR 20190099847; 14.08.2019 KR 20190099865; 15.08.2019 KR 20190099954; 04.08.2020 KR 20200097152
(71) Applicant: Kim, Young Su, Suwon-si, Gyeonggi-do 16648 (KR)
(72) Inventor: Kim, Young Su, Suwon-si, Gyeonggi-do 16648 (KR)
(74) Representative: Sander, Rolf
(86) International application number: PCT/KR2020/010540
(87) International publication number: WO 2021/029635

(57) **Abstract**

Disclosed is a display device allowing a change of an integrated mode which can be instantly changed such that an app or apps suitable for a situation such as a user's location, affiliation, psychology, and intention can be appropriately used. The device comprises a window, a rear cover, and a control board, and the control board comprises a mode control unit for generating, storing, and changing an integrated mode including an integrated app suitable for a user's situation.

## Description

### TECHNICAL FIELD

The present invention relates to a display device, and more particularly, to a display device allowing appropriate change of an integrated mode, including apps integrated in a group, to be suitable for various situations.

### BACKGROUND ART

In a display device, a display such as a liquid crystal display device (LCD), an organic light emitting diode (OLED), or an electrophoretic display device (EPD) forms a screen. A touchscreen is employed in the display device to provide convenience of handling, and a window for protecting the display device from damage of external impact or touch is disposed on the front surface of the touchscreen. Recently, with the advent of flexible and curved displays, windows corresponding thereto also emerge. Meanwhile, as smartphones are widely spread, various apps are used. The apps are deeply rooted in every corner of life including games, delivery, restaurants, various tastes, and various industries, as well as YouTube, Facebook, maps, payment systems, and alarms.

However, in the prior art, a method of automatically generating a group app has been proposed in Korean Laid-Opened Patent Application No. 2012-0069318, but it does not appropriately provide a user with an app or apps corresponding to a situation. For example, the app or apps are not appropriately utilized according to a situation such as a user's location, affiliation, psychology, intention, or the like. It is difficult for a user to search for an app or apps suitable and useful for the situations, and much time is required to search for the app or apps. Accordingly, the app or apps need to be immediately changed according to a user's situation.

### DISCLOSURE OF INVENTION

### TECHNICAL PROBLEM

An object to be solved by the present invention is to provide a display device allowing change of an integrated mode that can be immediately changed so that an app or apps suitable for a situation such as a user's location, affiliation, psychology, intention, or the like can be appropriately used.

### TECHNICAL SOLUTION

To accomplish the above object, according to one aspect of the present invention, there is provided a display device allowing change of an integrated mode, and the device comprises a window, a rear cover, and a control board, and the control board includes a mode control unit for generating, storing, and changing the integrated mode including one or more apps suitable for a user's situation.

In the device of the present invention, at least one among the window and the rear cover may be any one among a fixed type and a detachable type. At least one among the window and the rear cover may include a recognition unit for recognizing the user. The recognition unit may be any one among a recognition code and a recognition chip. The recognition code may be engraved in the form of a pattern on any one among the window and the rear cover. The control board may be connected to an integrated mode server existing inside or outside the display device, and the integrated mode server may include the mode control unit for generating, storing, and changing the integrated mode.

In a preferred device of the present invention, the mode control unit of the control board may be connected to a recognition unit of at least any one among the detachable window and the rear cover to perform change of the integrated mode. The control board may be connected to the mode control unit of the integrated mode server and the recognition unit of at least any one among the detachable window and the rear cover to perform change of the integrated mode. The mode control unit may generate any one among a request code signal, a detection code signal, a permission code signal, and an artificial intelligence code signal.

The integrated mode may include at least one additional software selected among a background screen, an image, music, a video, an application program, an integrated mode operating program, and an operating system. The operating system may be a comprehensive operating system of a higher concept. The integrated mode may include at least one selected among a video provided by an online video platform and a service provided by a social network.

In the device of the present invention, change of the integrated mode may be performed by any one among user's own approval, automatic approval irrespective of the user's own approval, automatic approval by artificial intelligence, and user's approval of an integrated mode proposed by the artificial intelligence. The approval may be made by any one among request, detection, permission, and artificial intelligence. The integrated mode may be any one among a closed-type integrated mode and an open-type integrated mode. The integrated mode may be classified into a user mode, an unspecified mode, a big data mode, and an artificial intelligence mode. The situation may be any one among a user's location, affiliation, psychology, intention, and the like.

### ADVANTAGEOUS EFFECTS

According to the display device allowing change of an integrated mode of the present invention, as an integrated mode changed to be suitable for a user's situation is provided, an integrated mode including an integrated app may be appropriately used according to a situation such as a user's location, affiliation, psychology, intention, or the like. The user may immediately use an integrated mode suitable for the situation. In addition, background screens, images, music, videos on YouTube, services provided by social networks such as Facebook, and the like may also be used in the integrated mode, together with the integrated app.

### BRIEF DESCRIPTION OF THE DRAWINGS

FIG. 1 is a schematic diagram for explaining a display device according to the present invention.
FIG. 2 is a block diagram showing a method of changing an integrated mode using a display device according to the present invention.

### DESCRIPTION OF SYMBOLS

| | | | |
|---|---|---|---|
| 100: | Display | | |
| 10: | Window | 11: | Touchscreen |
| 12: | Display | 13: | Control board |
| 14: | Rear cover | 15: | Mode control unit |
| 16: | Recognition unit | 20: | Integrated mode server |

### BEST MODE FOR CARRYING OUT THE INVENTION

Hereinafter, a preferred embodiment of the present invention will be described in detail with reference to the accompanying drawings. The embodiment described below may be modified in various other forms, and the scope of the present invention is not limited to the embodiment described below in detail. The embodiment of the present invention is provided to more completely explain the present invention to those skilled in the art. In the drawings, the expressions are exaggerated for convenience of explanation.

In an embodiment of the present invention, a display device that can be immediately changed to appropriately use an integrated mode according to a user's location, affiliation, psychology, intention, or the like is presented by providing an integrated mode changed to be suitable for a user's situation. To this end, a display device allowing change of an integrated mode to be suitable for a user's situation will be described in detail, and a process of appropriately utilizing the integrated mode according to a situation such as a user's location, affiliation, psychology, intention, or the like will be described in detail. Here, the integrated mode includes all kinds of software generated and changed according to the situations. The software essentially includes one or more apps corresponding to a situation, and optionally includes one or more pieces of additional software among a background screen, an image, music, a video, an application program, an integrated mode operating program, and an operating system.

The application program includes a program for approval, a program for recognition, and a program for security that are generated and changed to be suitable for the situations. The operating program is a program for operating the integrated mode, and the operating system is software that drives the display device. The operating system includes Android, IOS, and the like. An app, a background screen, an image, music, a video, an application program, and a program for operating the integrated mode are driven by the operating system.

The operating system may vary according to a specific purpose, such as a specific group, a specific region, or the like. For example, display devices related to national defense, space industry, education or the like may employ a separate operating system corresponding thereto, and countries such as India, China, the United States and the like may use display devices applying a separate operating system. The operating system in the embodiment of the present invention includes software capable of freely changing the operating system that varies according to the specific purpose. Here, the software capable of freely changing the operating system is referred to as a comprehensive operating system of a higher concept.

The additional software may further include videos on YouTube, services provided by social networks, and the like. Accordingly, when a situation changes in the integrated mode, an integrated app is essentially generated and changed, and in some cases, the additional software is also generated and changed. Hereinafter, it will be described focusing on the display device, generation of an integrated mode, change of the integrated mode, and a utilization example of the integrated mode change.

### <Display device>

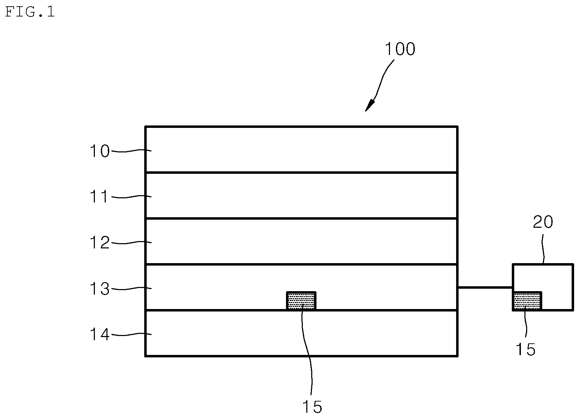

FIG. 1 is a schematic diagram for explaining a display device 100 according to an embodiment of the present invention. However, it does not express a drawing in a strict sense, and there may be components not shown in the drawing for convenience of description.

Referring to FIG. 1, the display device 100 includes a window 10, a touchscreen 11, a display 12, a control board 13, and a rear cover 14. At this point, the window 10 and the rear cover 14 may be a fixed type fixed to the touchscreen 11 and the control board 13, respectively, or at least one among the window 10 and the rear cover 14 may be a detachable type detachably attached to any one among the touchscreen 11 and the control board 13. Here, attachment and detachment may be an act of attaching and detaching a component. The window 10, the touchscreen 11, the display 12, the control board 13, and the rear cover 14 are publicly known and may be variously modified within the scope of the present invention. In some cases, the touchscreen 11 may not exist according to the type of the display device 100. The display device 100 is a mobile device and may include, for example, a smartphone, a tablet computer, a foldable phone, a rollable phone, a notebook computer, and the like.

At this point, the control board 13 may be wiredly or wirelessly connected to an integrated mode server 20 existing inside or outside the display device 100. Although not shown in the drawing, the integrated mode server 20 may be disposed inside the display device 100. The control board 13, the integrated mode server 20, or both of them include a mode control unit 15 for generating, storing, and changing an integrated mode according to the embodiment of the present invention. The mode control unit 15 performs a function of generating, storing, and changing the integrated mode, and in some cases, the control board 13, the window 10, the rear cover 14, and the integrated mode server 20 may be provided with a communication means for connecting to each other wiredly or wirelessly.

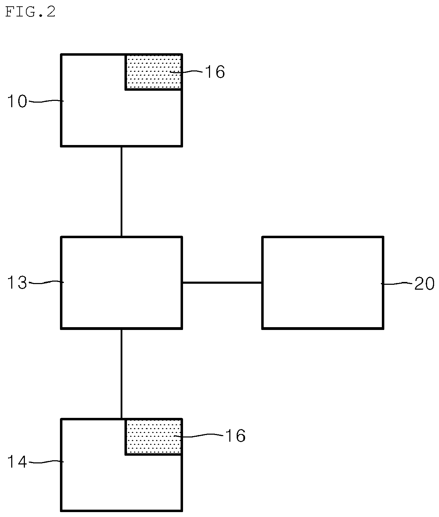

FIG. 2 is a block diagram showing a method of changing an integrated mode using a display device 100 according to an embodiment of the present invention. At this point, the display device 100 will be described with reference to FIG. 1.

Referring to FIG. 2, change of the integrated mode of the present invention may be performed in first to fourth methods. The first method is performed using the control board 13, and the second method is performed using the control board 13 and the integrated mode server 20 in combination. The first and second methods may be applied to both the fixed type and the detachable type. The third method is performed using the control board 13 and a recognition unit 16 of at least one among the detachable window 10 and rear cover 14 in combination. The fourth method is performed using the third method and the integrated mode server 20 in combination.

For the third and fourth methods, at least one among the window 10 and the rear cover 14 may include the recognition unit 16 for recognizing a user. The recognition unit 16 may include a recognition code or a recognition chip. The recognition code includes a barcode, a QR code, a braille code, an image code, and the like, and when the recognition unit 16 is recognized by a code reader, the mode control unit 15 may change the integrated mode. For example, it is possible to change the integrated mode by separating the window and recognizing the recognition code engraved on the window with a code reader. The recognition code may be engraved in the form of a pattern on any one among the window 10 and the rear cover 14.

When the recognition chip is a passive element, it may change the integrated mode after recognition is completed through a near field communication network mounted on the display device 100. When the recognition chip is an active element, at least one among the window 10 and the rear cover 14 may be equipped with a means for supplying power to the recognition chip. The power may be provided by a battery, sunlight, vibration energy, wireless charge, or electromagnetic waves or heat generated by the display device 100. The recognition chip operates by fingerprint recognition, password, eye recognition, face recognition, or the like, and change of the integrated mode is made when the recognition chip operates.

### <Generation of integrated mode>

The integrated mode according to an embodiment of the present invention has a plurality of types, and each integrated mode may vary according to a situation of a user. The situation includes a location, affiliation, psychology, intention, and the like. The integrated mode may be classified into a user mode set by a user, an unspecified mode set to be used by many unspecified people including the user, a big data mode set using big data corresponding to the situation, and an artificial intelligence mode set based on artificial intelligence (AI). The display device 100 may include all of the user mode, the unspecified mode, the big data mode, and the artificial intelligence mode, or some of the modes may be included.

The integrated mode corresponding to a situation is related to a location, affiliation, psychology, intention, and the like, and the integrated mode corresponding to a situation is generated, for example, as big data, and stored in the mode control unit 15 of the control board 13 or the mode control unit 15 of the integrated mode server 20. The location includes countries, cities, regions, and the like, and the affiliation includes soldiers, students, parents, lovers, police officers, entrepreneurs, office workers, astronauts, and the like. The psychology includes calm, active, depressed, and the like, and the intention includes entertainment, eating, traveling, exploring, studying, exercising, dating, and the like. For example, when a soldier living in the Republic of Korea enjoys entertainment in an active mood, a plurality of integrated modes is automatically generated using big data.

In addition, the integrated mode may be generated by combining the situation and surrounding states. For example, when a user enters a specific location, space, or service area, a specific integrated mode may be presented. The specific integrated mode may be a closed-type integrated mode for a specific club, a secret group, a hobby club, or the like, or may be an open-type integrated mode for quick access and use of necessary information on a restaurant, a movie theater, a school, a company, or the like.

### <Change of integrated mode>

The integrated mode according to an embodiment of the present invention is appropriately changed to be suitable for various situations. The change may be performed by any one among user's own approval, automatic approval irrespective of the user's own approval, automatic approval by artificial intelligence, and user's approval of an integrated mode proposed by artificial intelligence. That is, the process of making an approval is classified into an approval by a user and an approval by artificial intelligence. Here, the approval is classified as any one among request, detection, permission, and artificial intelligence, and induces change of the integrated mode. The approval by request, detection, permission, or artificial intelligence is converted into a distinguished code signal by the mode control unit 15. That is, the mode control unit 15 generates any one among a request code signal, a detection code signal, a permission code signal, and an artificial intelligence code signal.

The change by a user is made by any one among the request, detection, permission, and artificial intelligence. The request is a user's request and induces change by the display device 100 and change by the integrated mode server 20 connected to the display device 100 through a network. For the change by the display device 100, the window 10 or the rear cover 14 may be utilized. The detection induces a change when a user enters a specific situation. For example, when a user enters an entrance of any one of facilities such as a restaurant, a movie theater, a school, and a company, it changes the integrated mode to be suitable for the situation. At this point, a separate transmission unit may exist in the facility. An integrated app provided by any one of the facilities may be uploaded to the display device 100 by the integrated mode. When a user enters a facility where the change is not permitted, for example, a military base, permission to the facility should be obtained to change the integrated mode.

The artificial intelligence provides an integrated mode corresponding to a situation. The change made by the artificial intelligence may be automatically performed by the artificial intelligence, or an integrated mode proposed by the artificial intelligence may be changed by the user approval. The artificial intelligence may propose several integrated modes, and the user may approve an appropriate integrated mode after confirming the integrated modes.

### <Utilization example of integrated mode change>

Change of the integrated mode according to an embodiment of the present invention is performed through various ways. For example, when a new state B is approved by request, detection, permission, or artificial intelligence while the current state of a user is A, the user's state is changed to the new state B. When a new state C is approved by request, detection, permission, or artificial intelligence after the user's state is changed to the new state B, the user's state is changed to the new state C. When the current state A or a new state D is approved by request, detection, permission, or artificial intelligence after the user's state is changed to the new state C, the user's state is changed to the current state A or the new state D. In this way, change of the integrated mode to a new state or return to the original state is freely performed.

Conventionally, the number of apps of the display device 100 actually used by a user is limited to one or several tens. For example, when an office worker in 50s living in a specific area in Korea wants to use information and an app related to exercise, the user searches for a related app. Although the user searches for an app, it is difficult to find a widely used and useful app suitable for the office worker, and much time is required to search. Accordingly, the user is limited to using one or two apps related to exercise. However, when the user utilizes the integrated mode change of the present invention, as an integrated mode changed according to a situation is provided to the user, an integrated app related to exercise can be immediately provided. Similarly, when the office worker utilizes the integrated mode change of the present invention when climbing a mountain, as an integrated mode changed according to the situation is provided to the user, an integrated app related to mountain climbing can be immediately provided.

In addition, the office worker does not know an app used by an office worker in 50s living in New York, USA, and cannot experience the app. Similarly, the office worker does not know an app used by a 15-year-old middle school boy living in London, UK, and cannot experience the app. Although the office worker searches for an app, there is a limit in searching for the app, and it is difficult to find an app that is needed by and optimized for the user. There is much trouble in recognizing and experiencing usage of apps and an integrated app. In addition, when the office worker goes a business trip to Tokyo, Japan, the office worker encounters many difficulties in searching for and switching to a local app and using the local app. However, when the integrated mode change of the present invention is used, as an integrated mode changed according to a situation is provided to the user, an integrated app related to the region, local residents, and the like can be immediately provided.

Meanwhile, although a user downloads a plurality of apps, a step of optimally integrating the apps to be suitable for the user is needed. However, presently, it is limited to the search limit of the user and the basic specifications provided by the manufacturer of the display device 100. It is difficult for the user to install and use various apps since it requires a lot of effort and time to search for, experience, and learn the apps. In addition, change to a mode desired by the user, for example, a student mode, a soldier mode, an exercise mode, or a travel mode, is not performed in real-time. However, when the user utilizes the integrated mode change of the present invention, as an integrated mode changed according to a situation is provided to the user, an integrated app related to a mode desired by the user can be immediately provided.

Although a utilization example has been described above focusing on an integrated app, one or more pieces of additional software among a background screen, an image, music, a video, an application program, and an operating program may also be changed optionally. The application program includes a program for approval, a program for recognition, and a program for security, which are generated and changed to be suitable for the situations. The operating program is a program for operating the integrated mode, and the operating system drives the display device. The operating system includes Android, IOS, and the like. In addition, the operating system may further include a comprehensive operating system of a higher concept. The additional software may further include videos on YouTube, services provided by social networks, and the like. Accordingly, an integrated app is essentially generated and changed, and in some cases, the integrated mode may be used in a way of also generating and changing the additional software.

Although the present invention has been described above in detail with reference to a preferred embodiment, the present invention is not limited to the embodiment, and various modifications can be made by those skilled in the art within the scope of the spirit of the present invention.

## Claims

1. A display device allowing change of an integrated mode, the device comprising:
a window, a rear cover, and a control board, wherein
the control board includes a mode control unit for generating, storing, and changing the integrated mode including one or more apps suitable for a user's situation.

2. The device according to claim 1, wherein at least one among the window and the rear cover is any one among a fixed type and a detachable type.

3. The device according to claim 1, wherein at least one among the window and the rear cover includes a recognition unit for recognizing the user.

4. The device according to claim 3, wherein the recognition unit is any one among a recognition code and a recognition chip.

5. The device according to claim 4, wherein the recognition code is engraved in a form of a pattern on any one among the window and the rear cover.

6. The device according to claim 1, wherein the control board is connected to an integrated mode server existing inside or outside the display device, and the integrated mode server includes the mode control unit for generating, storing, and changing the integrated mode.

7. The device according to claim 1, wherein the mode control unit of the control board is connected to a recognition unit of at least any one among the detachable window and the rear cover to perform change of the integrated mode.

8. The device according to claim 6, wherein the control board is connected to the mode control unit of the integrated mode server and a recognition unit of at least any one among the detachable window and the rear cover to perform change of the integrated mode.

9. The device according to any one of claims 1 and 6, wherein the mode control unit generates any one among a request code signal, a detection code signal, a permission code signal, and an artificial intelligence code signal.

10. The device according to claim 1, wherein the integrated mode includes at least one additional software selected among a background screen, an image, music, a video, an application program, an integrated mode operating program, and an operating system.

11. The device according to claim 10, wherein the operating system is a comprehensive operating system of a higher concept.

12. The device according to claim 1, wherein the integrated mode includes at least one selected among a video provided by an online video platform and a service provided by a social network.

13. The device according to claim 1, wherein change of the integrated mode is performed by any one among user's own approval, automatic approval irrespective of the user's own approval, automatic approval by artificial intelligence, and user's approval of an integrated mode proposed by the artificial intelligence.

14. The device according to claim 11, wherein the approval is made by any one among request, detection, permission, and artificial intelligence.

15. The device according to claim 1, wherein the integrated mode is any one among a closed-type integrated mode and an open-type integrated mode.

16. The device according to claim 1, wherein the integrated mode is classified into a user mode, an unspecified mode, a big data mode, and an artificial intelligence mode.

17. The device according to claim 1, wherein the situation is any one among a user's location, affiliation, psychology, and intention.
